(19) Europäisches Patentamt
European Patent Office
Office européen des brevets

(11) Veröffentlichungsnummer : **0 008 090 B1**

(12) **EUROPÄISCHE PATENTSCHRIFT**

(45) Veröffentlichungstag der Patentschrift : **14.09.83**

(51) Int. Cl.³ : **C 08 L 67/00**, C 08 L 83/04, C 08 L 83/06, C 09 D 3/82

(21) Anmeldenummer : **79102793.1**

(22) Anmeldetag : **03.08.79**

(54) **Verfahren zur Herstellung von wässrigen Silicon-Polyester-Kombinationsharzsystemen und ihre Verwendung.**

(30) Priorität : **12.08.78 DE 2835495**
**12.08.78 DE 2835443**

(43) Veröffentlichungstag der Anmeldung : **20.02.80 Patentblatt 80/04**

(45) Bekanntmachung des Hinweises auf die Patenterteilung : **14.09.83 Patentblatt 83/37**

(84) Benannte Vertragsstaaten : **BE DE FR GB IT NL**

(56) Entgegenhaltungen :
**DE B 1 178 540**
**DE B 2 232 419**
**GB A 1 213 806**
**US A 3 044 980**
**US A 3 655 602**
**US A 4 035 332**
**US A 4 069 178**

(73) Patentinhaber : **BAYER AG**
**Zentralbereich Patente, Marken und Lizenzen**
**D-5090 Leverkusen 1, Bayerwerk (DE)**

(72) Erfinder : **Schlak, Ottfried, Dr.**
**Carl-Duisberg-Strasse 331**
**D-5090 Leverkusen (DE)**
Erfinder : **Moretto, Hans-Heinrich, Dr.**
**Formesstrasse 13**
**D-5000 Köln 80 (DE)**
Erfinder : **Clarenz, Werner, Dr.**
**Walter-Flex-Strasse 32**
**D-5090 Leverkusen (DE)**
Erfinder : **Peltzer, Bernd, Dr.**
**Scheiblerstrasse 99**
**D-4150 Krefeld (DE)**
Erfinder : **Burgmer, Willi**
**Am Katterbach 70**
**D-5060 Bergisch-Gladbach 2 (DE)**

**EP 0 008 090 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von wäßrigen Silicon-Polyester-Kombinationsharzsystemen und ihre Verwendung

Die vorliegende Erfindung betrifft ein Verfahren zur Herstellung von wäßrigen Silicon-Polyester-Kombinationsharzsystemen und ihre Verwendung als Lacke bzw. Lackbindemittel, Überzugs- und Beschichtungsmittel mit einem guten Pigmentaufnahmevermögen zur Erzeugung von Einbrennlacken mit guter Wärmebeständigkeit, Glanzhaltung, Haftung, Farbbeihaltung, Härte, Elastizität und geringer Thermoplastizität.

Wäßrige Beschichtungs- und Überzugsmischungen sind bekannt. So finden z. B. wäßrige Polyester- und Alkydharze vorzugsweise in Kombination mit Aminoplasten als wäßrige Einbrennlacke Verwendung. Derartige Mischungen haben in letzter Zeit besondere Beachtung gefunden, da sie gegenüber den üblichen Überzugsmischungen auf Basis organischer Lösungsmittel Vorteile aufweisen.

Organische Lösungsmittel sind in der Regel feuergefährlich und bei Verwendung von auf organischen Lösungsmitteln basierenden Beschichtungs- und Überzugsmischungen werden beim Aushärten teilweise toxische und übelriechende Dämpfe freigesetzt, die aufgearbeitet werden müssen.

Wäßrige Bindemittelsysteme besitzen diese Nachteile nicht und sind zudem kostengünstiger. Sie können zum Beispiel dadurch hergestellt werden, daß ein organisches Harz, welches genügend Säuregruppen enthält, mit Hilfe einer Base in Wasser gelöst oder emulgiert bzw. dispergiert wird. Die bisher bekannten wäßrigen Bindemittelsysteme aus Polyester- und Alkydharz zeigen jedoch in vielen Fällen eine unzureichende Wetter- und Wärmestabilität und ungenügende Glanzhaltung und Farbtonkonstanz.

Es ist bekannt, die guten lacktechnischen Eigenschaften von Polyesterharzen bezüglich Elastizität, Oberflächenhärte, Chemikalienbeständigkeit und Pigmentaufnahmevermögen hinsichtlich der oben aufgeführten Mängel durch Abmischen oder Kombination mit Silikonharzen zu verbessern. Dabei entstehen Beschichtungen und Überzüge, welche die günstigen Eigenschaften der beiden vorgenannten Harze in sich vereinigen. Bei reinen Mischungen, ohne chemische Umsetzung, von Silikonpräkondensat und Polyester wurde jedoch häufig festgestellt, daß in diesen Zusammensetzungen das Silikon oder Organopolysiloxan und der Polyester nicht miteinander verträglich sind, wenn sie zum Beschichten eingesetzt werden, und die Hitzebeständigkeit vergleichbarer Silikon-Polyesterkombinationsharze nicht erreicht wird.

Kombinationsharze auf Basis organischer Lösungsmittel sind z. B. in den deutschen Auslegeschriften 1 178 540 und 2 232 419 und in der US-Patentschrift 3 044 980 beschrieben. Dem Bestreben, die Vorteile der wasserlöslichen bzw. wasserverdünnbaren Polyesterharze durch die Vorzüge der Silikonharze zu ergänzen, steht jedoch die im allgemeinen extreme Wasserunverträglichkeit von Silikonharzen entgegen.

Die GB-A-1 213 806 beschreibt die Herstellung von wasserverdünnbaren Silicon-Polyester-Harzen, wobei die Einzelbestandteile Polycarbonsäuren, Polyol und Polysiloxan einfach verkocht werden. Die dort verwendeten Carbonsäuren enthalten aliphatische Doppelbindungen und es werden außerdem noch alpha-beta-ungesättigte Verbindungen zugefügt. Solche Systeme sind jedoch zur Herstellung von hochtemperaturbeständigen Einbrennlacken, wie sie erfindungsgemäß hergestellt werden, nicht geeignet.

In der US-PS 4 035 332 wird ebenfalls durch Reaktion der einzelnen Bestandteile : Polycarbonsäure, Polyol und Polysiloxan ein saures Kombinationsharz in einem Einstufenverfahren hergestellt. Nun ist aber aus der Literatur (C. R. Hiles et al., Industrial and Engineering Chemistry,*47* (No. 7), Seite 1418 (1955), « Copolymerisation of Alkyd silicones for Coatings ») bekannt, daß entsprechend hergestellte Silicon-Polyester-Kombinationsharze wesentliche Nachteile in Glanz, Glanzhaltung, Elastizität und Temperaturstabilität aufweisen. Erfindungsgemäß wird dagegen nach einem Zweistufenverfahren zunächst ein saurer Polyester hergestellt, der erst anschließend mit dem Polysiloxan kombiniert wird. Weiterhin werden in der obigen Patentschrift neben aromatischen auch aliphatische Polycarbonsäuren verwendet. Erfindungsgemäß werden dagegen ausschließlich aromatische Polycarbonsäuren verwendet; denn nur so werden Produkte erhalten, die bei hoher Temperaturbelastung genügend gilbungsstabil sind.

In der US-PS 4 069 278 ist ein Verfahren zur Herstellung von wasserlöslichen siliconmodifizierten Polyesterharzen beschrieben. Bei diesem Verfahren wird aus einem Alkydharz und einem Siliconharz zunächst in bekannter Weise ein Kombinationsharz hergestellt und dieses nachträglich mit einer Polycarbonsäure umgesetzt. Dieses Verfahren unterscheidet sich erheblich von dem erfindungsgemäßen Verfahren und führt zu wesentlichen Nachteilen. Bei diesem Verfahren kann nämlich die polyfunktionelle Carbonsäure bzw. Anhydrid in bekannter Reaktion auch mit den noch vorhandenen ≡ SiOH oder ≡ SiOR-Gruppen des Siliconharzes reagieren. Besonders die Reaktion des Anhydrids mit der ≡ SiOR-Gruppe oder mit Alkohol, der bei der Herstellung des Kombinationsharzes entstanden ist, führt zu niedermolekularen Bestandteilen (Halbestern), die zwar selbst wasserlöslich sind, aber nicht direkt bzw. hydrolysestabil mit dem Kombinationsharz verbunden sind, und so die Eigenschaften des Fertiglackes beeinträchtigen. Weiterhin werden für die Herstellung des Alkydharzes trocknende Fettsäuren oder aliphatische Polycarbonsäuren verwendet. Solche Alkydharze sind bekanntermaßen für die Verwendung als hochtemperaturstabile Einbrennlacke völlig ungeeignet. Aus der US-Patentschrift 3 513 083 ist bekannt, ein

Elektrophoresebad aus einer wäßrigen Harzmischung mit 1-20 Gew.-% Polyester- und Formaldehydharz und 0,5-5 Gew.-% Silikonharz herzustellen. Dabei wird das Silikonharz als Emulsion oder in Form eines Silikonmodifizierten Formaldehydharzes zugefügt. Bevorzugt werden dabei jedoch nur 2 bis 3 Gew.-% Silikonharz (bezogen auf die Mischung) eingesetzt. Der Formaldehydharzzusatz läßt jedoch Beschichtungen dieser Art nicht für hohe Temperaturbeanspruchung geeignet erscheinen ; auch ist der Silikonanteil zu gering, um diesen Nachteil auszugleichen.

Aus der US-Patentschrift 3 655 602 ist weiterhin ein Siloxan-modifiziertes, in Wasser dispergierbares Harz bekannt, das bis zu 30 Gew.-% (bezogen auf das gesamte Harz) an Organopolysiloxan enthält. Dabei wird im wesentlichen ein Acrylat Acrylsäure-Gemisch, das auch noch andere olefinische Verbindungen, wie z. B. Styrol, enthalten kann, in Gegenwart eines Kombinationsharzes aus einem aliphatisch-ungesättigten Polyester und einem Organopolysiloxan radikalisch polymerisiert, oder es wird zuerst radikalisch polymerisiert und danach mit dem entsprechenden Organopolysiloxan kondensiert. Weiterhin können diese Harze 1-40 Gew.-% eines Aminoplast-Harzes enthalten und als 5-15 %ige Mischung für elektrophoretische Beschichtungsverfahren verwendet werden. Nach diesem Verfahren hergestellte Beschichtungen und Überzüge erlauben jedoch auf Grund des hohen Acrylsäure- bzw. Acrylat-Anteils keine extreme Wärmebeanspruchung. Auch erscheint ein Organopolysiloxananteil von bis zu 30 Gew.-% als nicht hoch genug (vergl. US-PS 3 044 980 und DE-AS 2 521 170), um diesen Nachteil hinreichend auszugleichen. Außerdem ist bekannt, daß Aminoplast-haltige Beschichtungen und Überzüge bei hoher Dauertemperaturbelastungen zum Vergilben neigen.

In der US-PS 3 813 351 und der DE-OS 2 537 477 werden ebenfalls wäßrige Polyester-Siloxan-Kompositionen beschrieben. Dabei handelt es sich jedoch in beiden Fällen um stickstoffhaltige Siloxankomponenten, die bekanntlich gegenüber den üblichen SiOH- oder SiOR-funktionellen Organopolysiloxanen den Nachteil der aufwendigen und schwierigen Herstellung besitzen. Ferner fördern die stickstoffhaltige Komponente die Vergilbungstendenz des angehärteten Lackfilmes.

In der US-Patentschrift 3 935 147 wird die wäßrige Dispersion einer Harzzusammensetzung aus Polyester-, Polysiloxan-, N-Aldehydharz und einem Fluorkohlenwasserstoff-Emulgator beschrieben. Diese Zusammensetzung erhält jedoch nur bis zu 5 Gew.-% Siloxananteil und weist im übrigen, bezüglich des N-Aldehydharzes, die oben bereits erwähnten Nachteile auf.

In der DE-AS 2 232 419 wird die Herstellung von Silikon-Polyester-Kombinationsharzen in organischen Lösungsmitteln beschrieben. Als besonders erschwerend ist dabei jedoch die Forderung anzusehen, daß die Zahl der COH-Gruppen zu der Zahl der SiOR-Gruppen in dem engen Verhältnis von 1,25 bis 0,8 stehen muß, um die geforderten Eigenschaften der ausgehärteten Beschichtungen bzw. Überzüge zu erreichen. Diese Erschwernis wirkt sich besonders deutlich bei der Herstellung von Silikon-Polyester-Kombinationsharzen mit einem hohen Polysiloxangehalt aus.

Ziel der vorliegenden Erfindung war es daher, wäßrige Silikon-Polyester-Kombinationsharzsysteme bzw. Abmischungen mit mehr als 30 Gew.-% Polysiloxangehalt, die gute Eigenschaften aufweisen, herzustellen.

Überraschenderweise können mit dem erfindungsgemäßen Verfahren stabile, wäßrige, als Überzugs-, Beschichtungs- und Lackbindemittel sowie als Lacke geeignete Silikon-Polyester-Kombinationsharzsysteme, bzw. Abmischungen welche die oben genannten Nachteile nicht aufweisen, und trotz der schwierigen Verträglichkeit von Organopolysiloxanen mit Wasser einen Silikonharzanteil von 30 bis 80 Gew.-% — bezogen auf den Bindemittelfeststoff —, enthalten, hergestellt werden.

Gegenstand der vorliegenden Erfindung ist daher ein Verfahren zur Herstellung wäßriger Silicon-Polyester-Harzsysteme mit einem Siliconanteil von 30-80 Gew.-%, bezogen auf Bindemittelfeststoff, dadurch gekennzeichnet, daß

a) ein Polyesterharz mit einer Säurezahl von 50 bis 170 und ein Siliconpräkondensat mit SiOH bzw. SiOR-Funktionalität, oder

aa) ein aus diesen Bestandteilen durch Kondensation hergestelltes Silicon-Polyester-Kombinationsharz mit einer Säurezahl von 25 bis 110,

b) 0 bis 80 Gew.-% — bezogen auf den Bindemittelfeststoff — eines Emulgier- bzw. Dispergierhilfsmittels,

c) mit Hilfe einer Stickstoffbase in Wasser zu einem wäßrigen Silicon-Polyesterharzsystem emulgiert bzw. dispergiert werden,

gegebenenfalls Pigmente bzw. Füllstoffe zugesetzt werden, und wobei das Polyesterharz nach einem 2-Stufen-Verfahren aus mehrwertigen Alkoholen und aromatischen Polycarbonsäuren bzw. deren Estern oder Anhydriden hergestellt wurde und wobei das Siliconpräkondensat eine Zusammensetzung der Formel

$$R^{I}_{a}R^{II}_{b}R^{III}_{c}\,Si(OR)_{d}\,(OH)_{e}\,O_{4-(a+b+c+d+e)}/2$$

besitzt, worin $R^{I}$, $R^{II}$ und $R^{III}$ Reste aus gegebenenfalls halogen-substituierten, einwertigen, aliphatischen oder aromatischen Kohlenwasserstoffen mit 1-8 Kohlenstoffatomen sind, die Summe von a, b und c einen durchschnittlichen Wert von 1 bis 1,75 besitzt, d und e jeweils einen Wert von 0 bis 2 besitzen, die Summe aus d = e durchschnittlich 0,5 bis 2, die Summe von a, b, c, d und e nicht größer als 3 und OR ein Alkoxy-, Ätheralkoxy-, Aryloxy- oder Acyloxyrest mit 1-6 C-Atomen ist.

Die Verwendung der erfindungsgemäß hergestellten, gegebenenfalls pigmentierten wäßrigen Silikon-

Polyester-Kombinationsharzsysteme bzw. Abmischungen als Überzugs-, Beschichtungs- und Lackbindemittel bzw. als Lack ist gleichfalls Gegenstand der vorliegenden Erfindung.

Unter Bindemittelfeststoff im Sinne der vorliegenden Erfindung wird das feste Silikon-Polyester-Harzsystem verstanden.

Die Säurefunktion des Polyesterharzes wird dadurch erhalten, daß ein Teil der COH-Gruppen eines weitgehend säurefreien Polyesterharzes mit einem Dicarbonsäureanhydrid zu dem entsprechenden Halbester umgesetzt wird. Als Silikonpräkondensate eignen sich siliciumfunktionelle (nach der Definition von W. Noll ; Chemie und Technik der Silicone/Verlag Chemie, 1968, S. 3 ff) Arylalkylsiloxanharze. bevorzugt Phenylmethylsiloxanharze mit SiOH- bzw. SiOR-Funktionalität.

Die Kondensation kann ohne Katalysator bei erhöhter Temperatur und unter Entfernen des Kondensationsproduktes durchgeführt werden, bevorzugt wird jedoch ein Katalysator verwendet.

Die Abmischung erfolgt durch Verrühren von Polyester, Stickstoffbase, Wasser und Silikonpräkondensat, einem Emulgier- bzw. Dispergierhilfsmittel und gegebenenfalls einem organischen Lösungsmittel und/oder einer wäßrigen Pigmentenanreibung.

Die Base wird in einer solchen Menge eingesetzt, daß das wäßrige Silikon-Polyester-Kombinationharz bzw. die Abmischung einen pH-Wert von 6,5-9 besitzt. Die erhaltenen Emulsionen bzw. Dispersionen besitzen eine gute Stabilität und sind beliebig mit Wasser verdünnbar.

Die erhaltenen wäßrigen Silikon-Polyester-Kombinationsharze bzw. Abmischungen sind ausgezeichnete Bindemittel und lassen sich mit den üblichen Pigmenten, Füllstoffen und Lackzusätzen kombinieren. Die Härtung erfolgt thermisch und führt zu Überzügen und Beschichtungen mit sehr guten Eigenschaften, wie guter Wetter- und Hitzebeständigkeit, Haftung, Glanz, Farbbeinhaltung, Härte, guter Elastizität und geringer Thermoplastizität.

Geeignete hydroxyl- und säuregruppenreiche Polyester können durch Kondensation, z. B. Schmelzkondensation oder azeotrope Kondensation in einem Zweistufenverfahren hergestellt werden. Dabei wird ein hydroxylgruppenreicher Polyester als Vorstufe (z. B. Molverhältnis Polyalkohol zu Polycarbonsäure = 1 : 1 bis 1,3 : 1) und einer Säurezahl unter 50, vorzugsweise unter 15, mit einem Polycarbonsäureanhydrid zum entsprechenden Halbester in einer solchen Menge, daß der resultierende « aufgesäuerte » Polyester eine OH-Zahl von mehr als 30 und eine Säurezahl zwischen 50 und 170, bevorzugt 80-130, aufweist, umgesetzt.

Saure Polyester, die im Einstufenverfahren durch Kondensation bis zu der gewünschten Säurezahl hergestellt werden, führen zu Silikon-Polyester-Harzsystemen mit weniger guten Eigenschaften. Daraus hergestellte Einbrennlacke weisen insbesondere eine geringere Elastizität und einen geringeren Glanz auf.

Geeignete Polyester werden gebildet durch die Reaktion von u. a. Terepthalsäure, Pyromellithsäure, Isophthalsäure, Phthalsäure, Pyromellithsäure, Trimellithsäure oder deren Ester (z. B. Methylester) bzw. Anhydride mit mehrwertigen Alkoholen, wie z. B. Ethylenglykol, Butandiol, Trimethylolpropan, Glycerin, Pentaerythrit, Neopentylglykol.

Für die Polyesterherstellung können geeignete Katalysatoren wie z. B. Blei-, Zink-, Zinn-, Eisen-, Nickel-, Magnesium-, Kobalt-, Alkali- und Erdalkaliverbindungen verwendet werden.

Die Umsetzung verläuft im allgemeinen reibungslos bei Temperaturen zwischen 150 und 250 °C. Vorzugsweise findet die Reaktion in Abwesenheit von Lösungsmitteln statt, doch können gegebenenfalls Lösungsmittel mit einem Siedepunkt über 110 °C, z. B. Toluol, eingesetzt bzw. nach beendeter Reaktion zugefügt werden.

Silikonpräkondensate im Rahmen der vorliegenden Erfindung werden durch Hydrolyse bzw. teilweise Hydrolyse von Organosilanen der Formel I

$$R^{I}_{a}R^{II}_{b}R^{III}_{c}\ SiX_{4-(a+b+c)} \qquad (I)$$

in der $R^I$, $R^{II}$ und $R^{III}$ Reste ausgewählt aus gegebenenfalls halogen-substituierten, einwertigen Kohlenwasserstoffresten sind, X ein hydrolysierbarer Rest, ausgewählt aus Halogen, Alkoxy-, Aryloxy- und Acyloxyresten und die Summe aus a, b und c eine ganze Zahl von 1 bis 3 ist, hergestellt.

Beispiele für die Reste $R^I$, $R^{II}$ und $R^{III}$ sind Alkylgruppen wie Methyl- und Äthyl- bzw. Arylgruppen wie Phenyl-, spezifische Beispiele von Organochlorsilanen im Rahmen der Formel I sind Methyltrichlorsilan, Dimethyldichlorsilan, Methylphenyldichlorsilan, Phenyltrichlorsilan, Diphenyldichlorsilan und deren Mischungen.

Die niederen Alkylgruppen und die Phenylgruppe verleihen den Silikonmaterialien eine größere Hitzebeständigkeit, diese Gruppen und Mischungen davon sind daher bevorzugte Reste für $R^I$, $R^{II}$ und $R^{III}$ in Formel I.

Es können jedoch bis zu 25 Gew.-% des Materials mit anderen als Methyl-, Äthyl- und Phenylgruppen oder deren Derivaten toleriert werden, ohne daß die Hitzebeständigkeit gravierend nachläßt. Die genauen Anteile jedes der Organosilane in der Mischung hängt von den besonderen Eigenschaften ab, die in dem Endprodukt erwünscht sind. So führt z. B. eine große Menge an Methylgruppen zu einem eher spröden Produkt, während eine zu große Menge an Phenylgruppen ein Produkt mit erhöhter Thermoplastizität ergibt.

Bei der Hydrolyse bzw. teilweisen Hydrolyse werden Silikonpräkondensate der Formel II erhalten

$$R^I_a R^{II}_b R^{III}_c\, Si(OR)_d\, (OH)_e\, O_{4-(a+b+c+d+e)}/2 \qquad (II)$$

in der $R^I$, $R^{II}$ und $R^{III}$ die bereits oben angegebene Beudeutung besitzen, die Summe von a, b und c einen Wert von durchschnittlich 1 bis 1,75 aufweist, d und e jeweils einen Wert von 0 bis 2 besitzen, die Summe aus d + e durchschnittlich 0,5 bis 2, die Summe von a, b, c, d und e nicht größer als 3 und OR ein Alkoxy-, Ätheralkoxy-, Aryloxy- oder Acyloxyrest ist. Bevorzugte OR-Reste sind niedere aliphatische Alkoxygruppen wie Methoxy-, Äthoxy-, Propoxy- und Butoxygruppen.

Teilweise hydrolysierte Alkoxysilane werden durch Zusatz von weniger als der theoretisch benötigten Menge Wasser zu dem Alkoxysilan oder durch Zusatz der stöchiometrischen Menge an Wasser und Alkohol zu den entsprechen den Chlorsilanen erhalten. Dabei ist die Menge an Wasser so zu bemessen, daß das Verhältnis von Alkoxygruppen zu Silicium im angegebenen Verhältnis liegt.

Der bevorzugte Methoxygehalt liegt zwischen 10 und 20 Gew.-%. Für den Fall, daß ein überwiegend hydroxyfunktionelles Silikonpräkondensat verwendet wird, liegt der bevorzugte Hydroxygehalt zwischen 2 und 12 Gew.-%.

Die Kondensation des Polyesterharzes mit dem Silikonpräkondensat läßt sich durch Zusatz von z. B. Zirkon- und Titansäureestern, Trifluoressigsäure und den bereits oben genannten Metallverbindungen katalysieren. Dabei sind Katalysatormengen von 0,1 bis 0,001 Gew.-% in der Regel ausreichend.

Die Kondensation kann in Gegenwart eines geeigneten Lösungsmittels bei Temperaturen zwischen 100 und 250 °C und gegebenenfalls unter Verwendung eines Katalysators und/oder vermindertem Druck bis zu einem Umsetzungsgrad von etwa 80 %, erfolgen (gemessen z. B. an der Menge des bei der Kondensation entfernten Alkohols bzw. Wassers).

Für die spätere Verwendung wird das Mengenverhältnis von Polyesterharz zu Silikonpräkondensat so gewählt, daß das Kombinationsharz 30 bis 80 Gew.-% Polysiloxan enthält. Entgegen der Lehre der DE-AS 2 232 419 ist dabei das Verhältnis von reaktiven COH- zu SiOR-Gruppen unproblematisch.

Weiterhin ist es wesentlich, den Anteil des Polyesters und seine Säurezahl so zu wählen, daß die Säurezahl bezogen auf das Kombinationsharz 25 bis 110, vorzugsweise 35 bis 55, beträgt. Vorzugsweise wird das so erhaltene saure Silikon-Polyester-Kombinationsharz anschließend filtriert, gegebenenfalls unter Zuhilfenahme eines Filtrierhilfsmittels, wie Diatomeenerde.

Geeignete Lösungsmittel sind z. B. Glykolätheracylate einer Carbonsäure wie Äthylenglykolmonoäthylätheracetat, Äthylenglykolmonomethylätheracetat, Äthylenglykolmonobutylätheracetat, aromatische Lösungsmittel wie Toluol, Xylol und Gemische aromatischer Lösungsmittel, ferner Ketone wie Cyclohexanon.

Vorteilhaft werden auch Lösungsmittel, die eine Hydroxylgruppen enthalten, wie z. B. Methylglykol, Ethylglykol, Butylglykol, Propanol und/oder Butanol, in einer Menge bis zu 50 % (bezogen auf das Lösungsmittelgemisch) zugesetzt.

Die Hydroxylgruppen aufweisenden Lösungsmittel, die jedoch unterhalb der Einbrenntemperaturen verdampfen müssen, treten teilweise in Konkurrenz zu den COH-Gruppen des Polyesters und werden dann beim Einbrennen größtenteils durch Umesterungsreaktionen aus dem Verfahrensprodukt entfernt. Hierdurch wird eine größere Variationsbreite der Einbrenndauer, d. h. die bei zu langer Einwirkung der Einbrenntemperatur sonst zu beoachtetende Versprödung der Lacke wird hinausgezögert, erzielt. Außerdem ist ihr Zusatz dienlich zur Viskositätseinstellung des Produktes.

Die Gesamtmenge an organischen Lösungsmittel soll möglichst gering sein. Die Grenzen ergeben sich einerseits durch die Viskosität des Harzsystems, das noch gut verarbeitbar sein soll, andererseits durch den Feststoffgehalt des Endproduktes, der zweckmäßig 50 bis 75 Gew.-% betragen soll. Bevorzugt wird eine Gesamtmenge an organischen Lösungsmitteln zwischen 10 und 60 Gew.-% (bezogen auf den Feststoff) verwendet.

Die Überführung des säurefunktionellen Silikon-Polyester-Kombinationsharzes in die entsprechenden Salze erfolgen durch Zugabe von geeigneten Aminen.

Die Aminmenge wird vorzugsweise so bemessen, daß eine 50 Gew.-% Silikon-Polyester-Kombinationsharz enthaltende Verdünnung mit Wasser und gegebenenfalls organischen Lösungsmitteln einen pH-Wert zwischen 6,5 und 9 aufweist.

Einfache Abmischungen (ohne vorherige Kondensation von Silikon- und Polyesterharz) werden z. B. hergestellt, indem zunächst der saure Polyester mit Hilfe einer geeigneten Stickstoffbase in Wasser gelöst oder emulgiert bzw. dispergiert und danach mit dem Silikonpräkondensat vermischt wird. Erfindungsgemäß ist es jedoch ebenfalls möglich, zunächst das Silikonpräkondensat mit dem Polyester zu vermischen, oder das Abmischen in einem Schritt durchzuführen.

Geeignete Amine sind z. B. Ammoniak, primäre, sekundäre und tertiäre Alkylamine wie Methylamin, Diethylamin, Triethylamin und Aminoalkohole wie Ethanolamin, Diethanolamin, Triethanolamin, N-Methylethanolamin, N,N-Dimethylethanolamin, 3-Aminopropanol und deren Ether wie 3-Methoxypropylamin, aber auch z. B. Morpholin.

Als besonders geeignet haben sich neben $NH_3$ auch Triethylamin, Diethanolamin und Dimethylethanolamin bewährt.

Die auf den genannten pH-Bereich eingestellten Ansätze können mit Wasser nach Bedarf weiter verdünnt werden.

Überraschenderweise bildet das erfindungsgemäß hergestellte System auch ohne Zusatz von speziellen Emulgier- bzw. Dispergierhilfsmitteln Emulsion bzw. Dispersionen von guter Stabilität. Sofern sich jedoch ihre Verwendung auf die späteren Lackeigenschaften nicht negativ auswirkt, können ohne weiteres zusätzlich bis zu 10 Gew.-% (bezogen auf den Feststoff) Emulgier- bzw. Dispergierhilfsmittel verwendet werden. Geeignet sind hierfür sowohl neutrale wie z. B. Polyoxyäthylenstearat und anionische wie z. B. Natriumdodecylsulfonat als auch kationische Emulgier- bzw. Dispergierhilfsmittel, wie z. B. Dimethyldodecylbenzylammoniumchlorid.

Im Rahmen der vorliegenden Erfindung ist es in der Regel unproblematisch, ob das saure Polyesterharz bzw. die saure Polyester-Silikonpräkondensat-Abmischung bzw. das saure Silikon-Polyester-Kombinationsharz zuerst mit dem Amin neutralisiert und danach mit Wasser verrührt, oder ob das Amin gleichzeitig mit dem Wasser zugefügt wird. Bevorzugt wird jedoch das Silikonpräkondensat bzw. das Kombinationsharz zum Wasser gegeben. Ebenso ist es meistens unkritisch, zu welchem Zeitpunkt gegebenenfalls ein Emulgier- bzw. Dispergierhilfsmittel zugefügt wird. Wichtig ist ein gutes Verrühren der Komponenten ; dies geschieht vorteilhaft mit einem Dissolver. Die Umfangsgeschwindigkeit der Dispergierscheibe soll dabei vorzugsweise etwa 20 m/sec. betragen.

Diese Produkte können wahlweise durch den Einsatz von speziellen Emulgiermaschinen noch besser homogenisiert und evtl. in ihrer Stabilität verbessert werden, in der Regel sind jedoch die Größe und Verteilung der Teilchen hinreichend gut.

Die so erhaltenen stabilen Emulsionen bzw. Dispersionen, die durch Wasserzusatz auf einen Feststoffgehalt von 40 bis 70 Gew.-%, vorzugsweise 50 Gew.-%, eingestellt werden, und deren Viskosität ca. 100 bis 15 000 mPas bei 25 °C beträgt, bevorzugt 1 000 bis 6 000 mPas (bei zu geringer Viskosität kann gegebenenfalls ein gebräuchliches Verdickungsmittel zugefügt werden), besitzen ausgezeichnete Eigenschaften als Lackbindemittel. Sie sind mit den üblichen Pigmenten und Lackzusätzen, wie z. B. Glätte- und Verlaufsmitteln kombinierbar und ergeben mit Pigmenten versetzt, wie auch als Klarlacke, Beschichtungen bzw. Überzüge mit hervorragenden Eigenschaften. Dabei ist es vorteilhaft, die Pigmente in Form einer wäßrigen Anreibung zuzumischen. Erfindungsgemäß ist es jedoch ebenfalls möglich, zunächst wasserfrei zu pigmentieren und erst danach mit Wasser zu vermischen. Auch der Zusatz von Füllstoffen ist erfindungsgemäß möglich.

Die Härtung erfolgt wie bei Einbrennlacken üblich durch Erhitzen auf 180 bis 350 °C.

Im Gegensatz zum Stand der Technik erfolgt bei den erfindungsgemäß hergestellten wäßrigen Lacksystemen die Aushärtung nicht durch Zusatz von speziellen Kondensationsharzen, wie z. B. Aminoplasten oder über Doppelbindungen, sondern nur durch Kondensationsreaktion der COH-, SiOR- bzw. SiOH-Gruppen untereinander.

In den folgenden Beispielen wird der Gegenstand der vorliegenden Erfindung noch näher erläutert. Daraus geht hervor, daß die erfindungsgemäß hergestellten Produkte in vorteilhafter Weise die nach dem Stand der Technik bekannten günstigen Eigenschaften von Einbrennlacken aus Silikon-Polyester-Kombinationsharzen mit den Vorzügen der Wasserverdünnbarkeit und einem geringen Gehalt an organischen Lösungsmitteln verbinden.

Die in den nachfolgenden Beispielen angegebenen Teile bzw. Prozente sind, falls nicht anders vermerkt, Gewichtsteile bzw. Gewichtsprozente. Die angegebenen Feststoffgehalte wurden nach 3-stündigem Ausheizen bei 120 °C im Trockenschrank erhalten. Ph bedeutet Phenyl- und Me Methylrest.

## Beispiel 1

Teil A : Herstellung eines « aufgesäuerten » Polyesters :

Nach dem Zweistufenverfahren wurden zunächst 32.06 Teile Trimethylolpropan, 5.56 Teile Äthylenglykol und 35.01 Teile Terephthalsäure bei 250 °C unter Abtrennung von 7.58 Teilen Wasser bis zu einer Säurezahl < 3 kondensiert und anschließend bei 135 °C mit 34.95 Teilen Phthalsäureanhydrid reagiert. Der resultierende « aufgesäuerte » Polyester besaß eine Säurezahl von 99 und eine OH-Zahl von 165.

Teil B : Herstellung eines Silikonpräkondensats :

Nach der Methode der teilweisen Hydrolyse wurde ein Gemisch aus 64.88 Teilen $PhSiCl_3$ und 7.90 Teilen $Me_2SiCl_2$ bei einer Temperatur von 30 bis 40 °C unter Abspaltung von HCl mit 21.29 Teilen $CH_3OH$ und 5.30 Teilen $H_2O$ reagiert und anschließend die flüchtigen Bestandteile bis 150 °C und 20 mbar entfernt. Das resultierende Silikonpräpolymer besaß eine Viskosität von 384 cP und einen Methoxygehalt von 14.65 %.

Teil C : Herstellung eines Silikon-Polyester-Kombinationsharzes

31.80 Teile des « aufgesäuerten » Polyesters aus Teil A, 41,59 Teile des Silikonpräkondensats aus Teil B, 24.04 Teile Methylglykolacetat und 0,02 Teile Tetrabutyltitanat wurden bei 125 °C unter Abtrennung von 3.12 Teilen $CH_3OH$ reagiert. Danach wurden 3.67 Teilen Butanol zugefügt und das Produkt filtriert.

Das resultierende Silikon-Polyester-Kombinationsharz besaß eine Viskosität von 3 130 mPas und einen Feststoffgehalt von 74.2 %.

Teil D : Herstellung eines wäßrigen Silikon-Kombinationsharzsystems :

67.3 Teile des Silikon-Polyester-Kombinationsharzes aus Teil C wurden in ein Gefäß mit einem schnell laufenden Rührer gegeben und mit 1 Teil Polyoxyäthylenstearat und 4,5 Teilen Butylglykol bei 20 bis 40 °C homogen verrührt. Danach wurden ebenfalls unter schnellem Rühren, bei einer Temperatur von 30 bis 50 °C, während 10 Minuten 24,5 Teile $H_2O$ dest. und 2,7 Teile einer 25 %igen wäßrigen $NH_3$-Lösung zugefügt. Die resultierende Emulsion besaß eine Viskosität von 3 400 mPas und war nach 60 Tagen noch stabil. Sie setzte sich aus 51,6 Gew.-% HFeststoff, 2,3 Gew.-% Butanol, 4,5 Gew.-% Butylglykol, 15,1 Gew.-% Methylglykolacetat und 26,5 Gew.-% Wasser zusammen.

Teil E : Herstellung eines Lackes

Zu 100 Teilen des wäßrigen Silikon-Polyester-Kombinationsharzsystems aus Teil D wurden unter schnellem Rühren 38,7 Teile Pigment (55.3 Teile einer Titandioxid-Aufschlämmung mit 70 % Feststoff) gegeben und 10 Minuten verrührt. Zur Verarbeitung wurde der Lack mit weiteren 15,5 Teilen Wasser auf eine Auslaufzeit von 32 Sekunden verdünnt (gemessen nach DIN 53 211 bei 20 °C ; DIN-Becher mit einer Auslaufdüse von 4 mm Durchmesser).

Der Lack setzte sich aus 52.9 Gew.-% Feststoff, 1,3 Gew.-% Butanol, 2,6 Gew.-% Butylglykol, 8,8 Gew.-% Methylglykolacetat und 34.4 Gew.-% Wasser zusammen.

Der Lack wurde auf ein Tiefziehblech gespritzt (Naßschichtdicke : 75 µm) und 1 Stunde bei 200 °C eingebrannt. Die Trockenschichtdicke betrug ca. 25 µm und der Lackfilm besaß folgende Eigenschaften :

Elastizität (Erichsen-Tiefung in µm) : 4,0-4,2

Bleistifthärte (gemessen in Anlehnung an DIN 46 453 : bei 20 °C : 5 H
: bei 180 °C : 2 H

Glanz (60° Gardner-Glanzmeßgerät) : 91

Gilbung : Die Farbtonänderung des Lackfilmes war bei einer Wärmealterung von 100 Stunden bei 250 °C minimal.

Beispiel 2 (Vergleichsbeispiel)

Entsprechend Beispiel 1, Teil A, wurde ein « aufgesäuerter » Polyester mit einer Säurezahl von 47 und einer OH-Zahl von 213 hergestellt. Dieser wurde mit dem Silikonpräkondensat aus Beispiel 1, Teil B, wie in Beispiel 1, Teil C umgesetzt. Es resultierte ein Silikon-Polyester-Kombinationsharz, das eine Viskosität von 2 800 mPas und einen Feststoffgehalt von 73,8 % besaß.

67,3 Teile des obigen Silikon-Polyester-Kombinationsharzes wurden in ein Gefäß mit einem schnell laufenden Rührer gegeben und mit 1 Teil Polyoxyäthylenstearat und 4,5 Teilen Butylglykol bei 20 bis 40 °C homogen verrührt. Danach wurden ebenfalls unter schnellem Rühren bei einer Temperatur von 30 bis 50 °C, während 10 Minuten 24,5 Teile $H_2O$ dest. und 1,3 Teile 25 %ige $NH_3$-Lösung zugefügt.

Die resultierende Emulsion entmischte sich nach wenigen Stunden. Die Säurezahl des Polyesters bzw. die Säurezahl bezogen auf das Silikon-Polyester-Kombinationsharz war zu gering.

Beispiel 3

Teil A : Entsprechend Beispiel 1, Teil A, wurde ein « aufgesäuerter » Polyester mit einer Säurezahl von 157 und einer OH-Zahl von 108 hergestellt.

Teil B : Entsprechend Beispiel 1, Teil B, wurde ein Silikonpräkondensat hergestellt, das 37 Mol-% $Ph_2SiO$, 27 Mol-% $PhSiO_{3/2}$ und 36 Mol-% $Me_2SiO$ enthielt, und einen Methoxygehalt von 14,1 Gew.-% und eine Viskosität von 270 mPas besaß.

Teil C : 20,0 Teile des « aufgesäuerten » Polyesters aus Teil A, 60.0 Teile des Silikonpräkondensats aus Teil B, 16,9 Teile Methylglykolacetat und 0,02 Teile Tetrabutyltitanat wurden bei 125 °C und unter Abtrennung von 0,92 Teilen $CH_3OH$ reagiert. Danach wurden 4,0 Teile Butanol zugefügt und das Produkt filtriert. Das resultierende Silikon-Polyester-Kombinationsharz besaß eine Viskosität von 2 600 mPas und einen Feststoffgehalt von 79,4 %.

Teil D : 32,1 Teile $H_2O$ dest., 1,9 Teile einer 25 %igen $NH_3$-Lösung und 3,0 Teile Butanol wurden in ein Gefäß mit einem schnell laufenden Rührer gegeben.

Danach wurden unter schnellem Rühren 63,0 Teile des Silikon-Polyester-Kombinationsharzes aus Teil C während 10 Minuten zugegeben und weitere 20 Minuten gerührt. Die resultierende Emulsion besaß eine Viskosität von 3 200 mPas und war nach 60 Tagen noch stabil. Der Feststoffgehalt betrug 50,1 %.

Teil E : Das wäßrige Silikon-Polyester-Kombinationsharzsystem aus Teil D wurde entsprechend Beispiel 1 pigmentiert und auf 32 Sekunden Auslaufzeit eingestellt.

Der Lack wurde auf ein Tiefziehblech gespritzt (Naßschichtdicke : 75 µm) und 1 Stunde bei 200 °C

eingebrannt. Die Trockenschichtdicke betrug ca. 25 μm und der Lackfilm besaß folgende Eigenschaften:

Elastizität (Erichsen-Tiefung in μm): 7.1-7.2
Bleistifthärte (gemessen in Anlehnung an DIN 46 453) : bei 20 °C : 3 H
: bei 180 °C : H
Glanz (60 °C Gardner-Glanzmeßgerät): 90
Gilbung: Die Farbtonänderung des Lackfilmes war nach einer Wärmealterung von 100 Stunden bei 250 °C minimal.

## Beispiel 4

Entsprechend Beispiel 1, Teil A, wurde ein « aufgesäuerter » Polyester mit einer Säurezahl von 137 und einer OH-Zahl von 126 hergestellt.

23,7 Teile dieses Polyesters wurden mit 31,0 Teilen des Silikonpräkondensats aus Beispiel 1, Teil B, 5,5 Teilen Xylol und 0,02 Teilen Tetrabutyltitanat bei 120 °C unter Abtrennung von 1,12 Teilen $CH_3OH$ reagiert. Danach wurden schnell 31.1 Teile $H_2O$ dest., 2,7 Teile Butylglykol, 1,6 Teile Natriumdodecylsulfonat und 5,5 Teile N-Dimethyläthanolamin zugefügt. Anschließend wurde mit einem Dissolver 20 Minuten (20 m/s Umfangsgeschwindigkeit) verrührt. Die resultierende Emulsion besaß eine Viskosität von 2 900 mPas, einen Feststoffgehalt von 55 % und war nach 60 Tagen noch stabil.

## Beispiel 5

Durch Reaktion des Silikonpräkondensats aus Beispiel 3, Teil B, mit Wasser und Methanol wurde eine 80 %ige Silikonharzlösung hergestellt, die 15,2 Gew.-% SiOH (bezogen auf Festharz) enthielt.

31,2 Teile der Silikonharzlösung wurden mit 25,0 Teilen des « aufgesäuerten » Polyesters aus Beispiel 4 und 7,5 Teilen Xylol bei 140 °C unter Abtrennung von 6 Teilen $CH_3OH/H_2O$ reagiert. Danach wurde schnell ein Gemisch aus 35,4 Teilen $H_2O$ dest., 4,4 Teilen einer 25 %igen wäßrigen $NH_3$-Lösung und 2,5 Teilen Butanol zugefügt. Anschließend wurde mit einem Dissolver 20 Minuten (20 m/s Umfangsgeschwindigkeit) verrührt. Die resultierende Emulsion besaß eine Viskosität von 4 600 mPas und einen Feststoff von 50,3 % und war nach 60 Tagen noch stabil.

## Beispiel 6

27,7 Teile des « aufgesäuerten » Polyesters aus Beispiel 1, Teil A, 36,2 Teile des Silikonpräkondensats aus Beispiel 1, Teil B, 22,7 Teile Methylglykolacetat und 0,02 Teile Tetrabutyltitanat wurden bei 125 °C unter Abtrennung von 2,6 Teilen $CH_3OH$ reagiert. Danach wurden 3,2 Teile iso-Propanol und 12,78 Teile Butylglykol zugefügt und das Produkt filtriert. Das resultierende Silikon-Polyesters-Kombinationsharz besaß eine Viskosität von 970 mPas und einen Farbstoffgehalt von 64.9 %.

77 Teile dieses Kombinationsharzes wurden mit 37,5 Teilen festem Pigment (Titandioxid) verrieben und anschließend unter schnellem Rühren (Dissolver) zu 51 Teilen $H_2O$ dest. und 2,6 Teilen 25 %ige $NH_3$-Lösung gegeben und 20 Minuten verrührt. Der fertige Lack besaß einen Feststoffgehalt von 52,1 % und war nach 60 Tagen noch stabil.

Die Anwendungstechnische Prüfung ergab die gleichen guten Werte wie in Beispiel 1.

## Beispiel 7

Teil C: Herstellung eines wäßrigen Silikon-Polyester-Harzsystems (Abmischung):

25,5 Teile des « aufgesäuerten » Polyesters aus Beispiel 1, Teil A, 29,9 Teile $H_2O$ dest., 7,5 Teile Isopropanol, 3,1 Teile einer 25 %igen wäßrigen $NH_3$-Lösung und 0,6 Teile Polyoxyethylenstearat wurden bei 20 bis 40 °C homogen verrührt; anschließend wurden unter schnellen Rühren bei einer Temperatur von 30 bis 50 °C während 30 Minuten 33,4 Teile des Silikonpräkondensats aus Beispiel 1, Teil B zugeführt, und weitere 20 Minuten gerührt.

Die resultierende Emulsion besaß eine Viskosität von 3 500 cP und war noch nach 60 Tagen stabil. Sie setzte sich zusammen aus 60.3 Gew.-% Feststoff, 32,2 Gew.-% Wasser und 7,5 Gew.-% Isopropanol.

Die mittlere Teilchengröße der Emulsion betrug 0,365 μm und die Verteilungsbreite 0,3.

Teil D: Herstellung eines Lackes:

Zu 100 Teilen des wäßrigen Silikon-Polyester-Harzsystems aus Teil C wurden unter schnellem Rühren 45.2 Teile Pigment in einer Titandioxid-Aufschlämmung mit 70 % Feststoff gegeben und 10 Minuten verrührt.

Zur Verarbeitung wurde der Lack mit weiteren 8,8 Teilen Wasser auf eine Auslaufzeit von 35 Sekunden verdünnt (gemessen nach DIN 53 211 bei 25 °C; DIN-Becher mit einer Auslaufdüse von 4 mm

Durchmesser). Der Lack setzte sich zusammen aus : 60,5 Gew.-% Feststoff, 35,2 Gew.-% Wasser und 4,3 Gew.-% Isopropanol.

Der Lack wurde auf ein Tiefziehblech gespritzt (Naßschichtdicke : 70 µm) und 1 Stunde bei 200 °C eingebrannt. Die Trockenschichtdicke betrug ca. 25 µm und der Lackfilm besaß folgende Eigenschaften : Elastizität (Erichsen-Tiefung in µm) : 3.1-3.3.

Bleistifthärte (gemessen entsprechend DIN 46 453) : bei 20 °C : 6 H
bei 180 °C : 2 H

Glanz (60° Gardner-Glanzmeßgerät) : 87

Gilbung : Die Farbtonänderung des Lackfilms bei einer Wärmealterung von 100 Stunden bei 250 °C war minimal.

Beispiel 8 (Vergleichsbeispiel)

Entsprechend Beispiel 1, Teil A wurde ein « aufgesäuerter » Polyester mit einer Säurezahl von 47 und einer OH-Zahl von 213 hergestellt. Dieser wurde mit dem Silikonpräkondensat aus Beispiel 1, Teil B entsprechend Beispiel 7, Teil C umgesetzt :

25,5 Teile des obigen « aufgesäuerten » Polyesters, 31,5 Teile destilliertes $H_2O$, 7,5 Teile Isopropanol, 1,5 Teile einer 25 %igen wäßrigen $NH_3$-Lösung und 0,6 Teile Polyoxyäthylenstearat wurden bei 20 bis 40 °C verrührt ; anschließend wurden unter schnellem Rühren bei einer Temperatur von 30 bis 50 °C während 30 Minuten 33,4 Teile des Silikonpräkondensats zugefügt und weitere 20 Minuten gerührt.

Die resultierende Emulsion entmischte sich nach wenigen Stunden. Die Säurezahl des Polyesters bzw. die Säurezahl bezogen auf den Gesamtfeststoff war zu gering.

Beispiel 9

Teil A : Entsprechend Beispiel 1, Teil A, wurde ein « aufgesäuerter » Polyester mit einer Säurezahl von 157 und einer OH-Zahl von 108 hergestellt.

Teil B : Entsprechend Beispiel 1, Teil B, wurde ein Silikonpräkondensat hergestellt, das 37 Mol-% $Ph_2SiO$, 27 Mol-% $PhSiO_{3/2}$ und 36 Mol-% $Me_2SiO$ enthielt und einem Methoxygehalt von 14,1 Gew.-% und eine Viskosität von 270 cP besaß.

Teil C : 12,4 Teile des « aufgesäuerten » Polyesters aus Teil A, 27,9 Teile $H_2O$ dest., 4,6 Teile Isopropanol, 3,1 Teile Butanol und 2,4 Teile einer 25 %igen wäßrigen $NH_3$-Lösung wurden bei 20 bis 40 °C homogen verrührt ; anschließend wurden unter schnellen Rühren bei einer Temperatur von 30 bis 50 °C während 30 Minuten 49,6 Teile des Silikonpräkondensats aus Teil B zugefügt. Die resultierende Emulsion besaß eine Viskosität von 4 100 mPas und war nach 60 Tagen noch stabil. Der Feststoffgehalt betrugt 63,1 %.

Teil D : Das wäßrige Silikon-Polyester-Harzsystem aus Teil C wurde entsprechend Beispiel 7 pigmentiert und auf 32 Sekunden Auslaufzeit eingestellt. Der Lack wurde auf ein Tiefziehbleck gespritzt (Naßschichtdicke : 73 µm) und 1 Stunde bei 200 °C eingebrannt. Die Trockenschichtdicke betrug ca. 28 µm und der Lackfilm besaß folgende Eigenschaften :

Elastizität (Erichsen-Tiefung in µm) : 7.3-7.6

Bleistifhärte (gemessen in Anlehnung an DIN 46 453 : bei 20 °C : 3 H
: bei 180 °C : H

Glanz (60° Gardner-Glanzmeßgerät) : 88

Gilbung : Die Farbtonänderung des Lackfilmes war nach einer Wärmealterung von 100 Stunden bei 250 °C minimal.

Beispiel 10

Entsprechend Beispiel 1, Teil B, wurde ein Silikonpräkondensat hergestellt, das 17 Mol-% $Ph_2SiO$, 13 Mol-% $Me_2SiO$ und 70 Mol-% $PhSiO_{3/2}$ enthielt und einem Isopropoxygehalt von 19,3 Gew.-% und eine Viskosität von 1 355 mPas besaß.

Zu 42,7 Teilen des obigen Silikonpräkondensats wurde unter schnellen Rühren bei 30 bis 50 °C während 30 Minuten eine Mischung aus 18,3 Teilen des « aufgesäuerten » Polyesters aus Beispiel 1, Teil A, 7,9 Teilen Butylglykol und 2,2-Teilen einer 25 %igen wäßrigen $NH_3$-Lösung gegeben. Anschließend wurde 20 Minuten gerührt. Die resultierende Emulsion besaß eine Viskosität von 3 800 mPas und war nach 60 Tagen noch stabil. Der Feststoffgehalt betrug 60,8 %.

Beispiel 11

Entsprechend Beispiel 1, Teil A, wurde ein « aufgesäuerter » Polyester mit einer Säurezahl von 136 und einer OH-Zahl von 129 hergestellt.

25,6 Teile dieses Polyesters, 3,2 Teile Butanol 5,5 Teile N-Dimethyläthanolamin und 20,8 Teile $H_2O$ dest. wurden bei 20 bis 40 °C vermischt und anschließend filtriert. Zu diesem Gemisch wurde während 30 Minuten bei 30 bis 50 °C unter schnellem Rühren eine Mischung aus 38,5 Teilen des Silikonpräkondensats aus Beispiel 1, Teil B und 6,4 Teilen Xylol gegeben und weitere 20 Minuten gerührt (Dissolver, 20 m/s Umfangsgeschwindigkeit). Die resultierende Emulsion besaß eine Viskosität von 1 850 mPas, einen Feststoffgehalt von 65,2 % und war nach 60 Tagen noch stabil.

Beispiel 12

Durch Reaktion des Silikonpräkondensats aus Beispiel 9, Teil B mit Wasser und Methanol, Zugabe von Xylol und Entfernen von MeOH/$H_2O$ wurde eine 80 %ige Silikonharzlösung in Xylol hergestellt, die 14,8 Gew.-% SiOH (bezogen auf Festharz) enthielt.

44,9 Teile dieser Silikonharzlösung wurden unter schnellem Rühren bei 30 bis 50 °C während 30 Minuten zu einer Mischung aus 23,9 Teilen des « aufgesäuerten » Polyesters aus Beispiel 5, 3,0 Teilen Butylglykol, 4,0 Teilen einer 25 %igen wäßrigen $NH_3$-Lösung und 24,2 Teilen $H_2O$ dest. gegeben.

Danach wurde 20 Minuten gerührt (Dissolver, 20 m/s Umfangsgeschwindigkeit).

Die resultierende Emulsion besaß eine Viskosität von 4 500 mPas, einen Feststoffgehalt von 60.4 % und war nach 60 Tagen noch stabil.

Beispiel 13

Zu einer Mischung aus 16,0 Teilen des « aufgesäuerten » Polyesters aus Beispiel 1, Teil A, 3,7 Teilen Isopropanol, 20 Teilen einer 25 %igen wäßrigen $NH_3$—Lösung und 29,5 Teilen destilliertem $H_2O$ wurden (bei 20 bis 40 °C) unter schnellem Rühren 27,8 Teile festes Pigment gegeben und 30 Minuten gerührt (Dissolver, 20 m/s Umfangsgeschwindigkeit). Anschließend wurden während 20 Minuten bei einer Temperatur von 20 bis 40 °C unter schnellem Rühren 21,0 Teile des Silikonpräkondensats aus Beispiel 1, Teil B, zugefügt und weitere 20 Minuten gerührt.

Die resultierende Mischung besaß eine Viskosität von 2 300 mPas, einen Feststoffgehalt von 64,7 % und war nach 60 Tagen noch stabil.

Die anwendungstechnische Prüfung ergab die gleichen guten Werte wie in Beispiel 7.

Beispiel 14

Zu einer Mischung aus 21,0 Teilen des Silikonpräkondensats aus Beispiel 1, Teil B und 1,9 Teilen Butylglykol wurden bei 20 bis 40 °C unter schnellem Rühren 27,8 Teile Titandioxid-Pigment gegeben und 30 Minuten gerührt (Dissolver, 20 m/s Umfangsgeschwindigkeit). Anschließend wurde bei einer Temperatur von 20 bis 40 °C unter schnellem Rühren eine Mischung aus 16,0 Teilen des « aufgesäuerten » Polyesters aus Beispiel 1, Teil A, 3,7 Teilen Isopropanol, 2,0 Teilen einer 25 %igen wäßrigen $NH_3$-Lösung und 27,6 Teilen destilliertem $H_2O$ zugegeben und weitere 20 Minuten gerührt.

Die resultierende Mischung besaß eine Viskosität von 1 800 mPas, einen Feststoffgehalt von 64,3 % und war nach 60 Tagen noch stabil.

Die Anwendungstechnische Prüfung ergab die gleichen guten Werte wie in Beispiel 7.

**Ansprüche**

1. Verfahren zur Herstellung wäßriger Silicon-Polyester-Harzsysteme mit einem Siliconanteil von 30-80 Gew.-%, bezogen auf Bindemittelfeststoff, dadurch gekennzeichnet, daß

a) ein Polyesterharz mit einer Säurezahl von 50 bis 170 und ein Siliconpräkondensat mit SiOH bzw. SiOR-Funktionalität, oder

aa) ein aus diesen Bestandteilen durch Kondensation hergestelltes Silicon-Polyester-Kombinationsharz mit einer Säurezahl von 25 bis 110,

b) 0 bis 80 Gew.-% — bezogen auf den Bindemittelfeststoff — eines Emulgier- bzw. Dispergierhilfsmittels,

c) mit Hilfe einer Stickstoffbase in Wasser zu einem wäßrigen Silicon-Polyesterharzsystem emulgiert bzw. dispergiert werden,

gegebenenfalls Pigmente bzw. Füllstoffe zugesetzt werden, und wobei das Polyesterharz nach einem 2-Stufen-Verfahren aus mehrwertigen Alkoholen und Polycarbonsäuren bzw. deren Estern oder Anhydriden hergestellt wurde und wobei das Siliconpräkondensat eine Zusammensetzung der Formel

$$R^I_a R^{II}_b R^{III}_c\, Si(OR)_d\, (OH)_e\, O_{4-(a+b+c+d+e)}/2$$

besitzt, worin $R^I$, $R^{II}$ und $R^{III}$ Reste aus gegebenenfalls halogen-substituierten, einwertigen, aliphatischen oder aromatischen Kohlenwasserstoffen mit 1-8 Kohlenstoffatomen sind, die Summe von a, b und c einen durchschnittlichen Wert von 1 bis 1,75 besitzt, d und e jeweils einen Wert von 0 bis 2 besitzen, die Summe aus d + e durchschnittlich 0,5 bis 2, die Summe von a, b, c, d und e nicht größer als 3 und OR ein Alkoxy-, Ätheralkoxy-, Aryloxy- oder Acyloxyrest mit 1-6 C-Atomen ist.

2. Verfahren nach Anspruch 1, dadurch gekennzeichnet, daß der saure Polyester mit Hilfe einer

Stickstoffbase in Wasser gelöst oder emulgiert bzw. dispergiert und anschließend mit dem Siliconpräkondensat vermischt wird.

3. Verfahren nach einem der Ansprüche 1 oder 2, dadurch gekennzeichnet, daß die wäßrigen Silicon-Polyester-Harzsysteme einen Feststoffgehalt zwischen 40 und 75 Gew.-% aufweisen.

4. Verfahren nach einem oder mehreren der Ansprüche 1 bis 3, dadurch gekennzeichnet, daß zunächst die wäßrige Polyesterlösung pigmentiert und erst danach mit dem Siliconpräkondensat vermischt wird.

5. Verfahren nach einem oder mehreren der Ansprüche 1 bis 4, dadurch gekennzeichnet, daß zunächst das Siliconpräkondensat pigmentiert und erst danach mit der wäßrigen Polyesterlösung vermischt wird.

6. Verwendung der wäßrigen Silicon-Polyester-Harzsysteme hergestellt gemäß einem der Ansprüche 1 bis 5 als hochtemperaturbeständige Einbrennlacke.

## Claims

1. A process for the production of aqueous silicone polyester resin systems with a silicone content of from 30 to 80 % by weight based on binder solid, characterised in that

a) a polyester resin with an acid number of from 50 to 170 and a silicone precondensate with SiOH or SiOR functionality, or

aa) a silicone polyester combination resin produced from these components by condensation, with an acid number of from 25 to 110,

b) from 0 to 80 % by weight, based on the binder solid, of an emulsifying agent or dispersant

c) are emulsified or dispersed by means of a nitrogen base in water to form an aqueous silicone polyester resin system,

pigments or fillers are optionally added, and wherein the polyester resin was produced by a two stage process from polyhydric alcohols and polycarboxylic acids or esters or anhydrides thereof and wherein the silicone precondensate has a composition corresponding to the formula

$$R^{I}_{a}R^{II}_{b}R^{III}_{c}\ Si(OR)_d\ (OH)_e\ O_{4-(a+b+c+d+e)}/2\cdot$$

in which $R^I$, $R^{II}$ and $R^{III}$ are radicals of optionally halogen-substituted, monovalent, aliphatic or aromatic hydrocarbons with from 1 to 8 carbon atoms, the sum of a, b and c has an average value of from 1 to 1.75, d and e each have a value of from 0 to 2, the sum of d + e is 0.5 to 2 on average, the sum of a, b, c, d and e is not greater than 3 and OR is an alkoxy, etheralkoxy, aryloxy or acyloxy radical with from 1 to 6 carbon atoms.

2. A process according to Claim 1, characterised in that the acidic polyester is dissolved or emulsified and dispersed in water by means of a nitrogen base and is then mixed with the silicone precondensate.

3. A process according to one of Claims 1 or 2, characterised in that the aqueous silicone polyester resin systems have a solids content of between 40 and 75 % by weight.

4. A process according to one or more of Claims 1 to 3, characterised in that the aqueous polyester solution is firstly pigmented and only afterwards mixed with the silicone precondensate.

5. A process according to one or more of Claims 1 to 4, characterised in that the silicone precondensate is firstly pigmented and only afterwards mixed with the aqueous polyester solution.

6. Use of the aqueous silicone polyester resin systems produced in accordance with one of Claims 1 to 5 as high temperature resistant stoving lacquers.

## Revendications

1. Procédé de fabrication de systèmes résinaux aqueux silicone-polyester ayant une proportion de silicone de 30-80 % en poids par rapport à la matière solide du liant, caractérisé en ce qu'on émulsifie ou disperse

a) une résine polyester ayant un indice d'acide de 50 à 170 et un précondensat de silicone ayant une fonctionnalité SiOH ou SiOR, ou

aa) une résine de combinaison silicone-polyester, préparée à partir de ces constituants par condensation, ayant un indice d'acide de 25 à 110,

b) 0 à 80 % en poids — par rapport à la matière solide du liant — d'un auxiliaire d'émulsification ou de dispersion,

c) à l'aide d'une base azotée dans de l'eau pour obtenir un système résineux aqueux silicone-polyester,

on ajoute éventuellement des pigments ou des matières de charge, la résine polyester ayant été préparée par un procédé en deux stades à partir d'alcools polyvalents et d'acides polycarboxyliques ou de leurs esters ou anhydrides et le précondensat de silicone possédant une composition de formule

$$R^{I}_{a}R^{II}_{b}R^{III}_{c}\ Si(OR)_d\ (OH)_e\ O_{4-(a+b+c+d+e)}/2$$

dans laquelle $R^{I}$, $R^{II}$ et $R^{III}$ sont des radicaux d'hydrocarbures aliphatiques ou aromatiques monovalents éventuellement halogéno-substitués ayant 1 à 8 atomes de carbone, la somme de a, b et c possédant une valeur moyenne de 1 à 1,75, d et e possédant chacun une valeur de 0 à 2, la somme de d + e étant en moyenne de 0,5 à 2, la somme de a, b, c, d et e n'étant pas supérieure à 3 et OR étant un radical alcoxy, étheralcoxy, aryloxy ou acyloxy ayant 1 à 6 atomes de carbone.

2. Procédé selon la revendication 1, caractérisé en ce qu'on dissout, émulsifie ou disperse le polyester acide à l'aide d'une base azotée dans de l'eau et on le mélange ensuite avec le précondensat de silicone.

3. Procédé selon la revendication 1 ou 2, caractérisé en ce que les systèmes résineux aqueux silicone-polyester présentent une teneur en matière solide entre 40 et 75 % en poids.

4. Procédé selon une ou plusieurs des revendications 1 à 3, caractérisé en ce qu'on pigmente tout d'abord la solution aqueuse de polyester et en ce que ce n'est qu'après qu'on la mélange avec le précondensat de silicone.

5. Procédé selon une ou plusieurs des revendications 1 à 4, caractérisé en ce qu'on pigmente tout d'abord le précondensat de silicone et en ce que ce n'est qu'après qu'on le mélange avec la solution aqueuse de polyester.

6. Utilisation des systèmes résineux aqueux de silicone-polyester préparés selon l'une des revendications 1 à 5 comme vernis à cuire résistant aux hautes températures.